# EUROPÄISCHE PATENTSCHRIFT

(11) **EP 3 216 743 B1**
(45) Veröffentlichungstag und Bekanntmachung des Hinweises auf die Patenterteilung: **27.06.2018**
(21) Anmeldenummer: 17159056.5
(22) Anmeldetag: 03.03.2017
(51) Int. Cl.: B66F 9/06, B66F 9/075

(54) **FLURFÖRDERZEUG MIT ASSISTENZVORRICHTUNG**
INDUSTRIAL TRUCK WITH ASSISTANCE SYSTEM
CHARIOT DE MANUTENTION DOTÉ D'UN DISPOSITIF D'AIDE

(30) Priorität: 07.03.2016 DE 102016104088
(43) Veröffentlichungstag der Anmeldung: 13.09.2017
(73) Patentinhaber: STILL GmbH, 22113 Hamburg (DE)
(72) Erfinder: Viereck, Volker, 23898 Kühsen (DE); Krüger-Basjmeleh, Tino, 25469 Halstenbek (DE); Wittmann, Thomas, 21035 Hamburg (DE); Fischer, Christian, 24598 Boostedt (DE)
(74) Vertreter: Patentship Patentanwaltsgesellschaft mbH

(56) Entgegenhaltungen:
- EP-A1- 2 851 331
- CN-U- 203 887 863
- JP-A- H05 289 739
- US-B1- 6 194 860

## Beschreibung

Die Erfindung betrifft ein Flurförderzeug mit einer Assistenzvorrichtung. Insbesondere betrifft die Erfindung ein Flurförderzeug mit mindestens einem Umgebungssensor zur Erfassung der relativen Position eines Bedieners in der Umgebung des Flurförderzeugs.

Bei Flurförderzeugen, insbesondere Lagertechnikgeräten, die für das Kommissionieren eingesetzt werden sollen, sind Bildauswertungssysteme mit Umgebungssensoren bekannt, mit denen die Position eines Bedieners in der Umgebung erfasst wird. Solche Fahrzeuge sind als reine Mitgängerfahrzeuge bekannt, bei denen der Bediener neben dem Fahrzeug herläuft, beispielsweise einem Gabelhubwagen. Daneben sind auch Fahrzeuge bekannt, die einen Fahrerplatz zum Mitfahren aufweisen. Beim eigentlichen Kommissionieren kann dieser Fahrerplatz leicht verlassen werden, um Waren aufzunehmen und beispielsweise auf einer Palette auf einer Lastgabel abzulegen.

Über solche Bildauswertungssysteme, beispielsweise zweidimensionale Laserscanner (2-D Laserscanner) in einer Ebene oder auch dreidimensionale Laserscanner (3-D Laserscanner) ebenso wie Distanzen erfassende optische Sensoren wie beispielsweise eine Time Of Flight Kamera, werden beispielsweise Hindernisse in der Umgebung, Fahrwege, Positionen von Paletten aber auch die Position des mitlaufenden Bedieners beim Kommissionieren erfasst. Abhängig hiervon kann ein Ausweichen, ein Notstopp oder eine Geschwindigkeitsreduzierung erfolgen.

Es ist weiterhin bekannt, dass zur Arbeitserleichterung beim Kommissionieren ein Lagertechnikgerät bzw. Flurförderzeug ferngesteuert bewegt werden kann, beispielsweise indem über eine Fernbedienung ein Knopf gedrückt wird und, solange dieses Signal erfolgt, das Fahrzeug sich weiter bewegt. Ebenso ist es auch denkbar, dass abhängig von der über optische Sensoren und ein Bildauswertungssystem erfassten Position der Bedienperson oder anderer erfasste Elemente in der Umgebung das Flurförderzeug selbstständig zu einer nächsten Position für das Kommissionieren fährt.

Aus der EP 2 851 331 A1 ist ein gattungsgemäßes Flurförderzeug mit einem Umgebungssensor bekannt, der als optischer Sensor ausgebildet ist, wobei die Position einer Bedienperson innerhalb eines Überwachungsbereichs des Umgebungssensors erfasst wird. Überschreitet die Bedienperson eine definierte Überwachungsgrenze innerhalb des Überwachungsbereichs, wird das Flurförderzeug automatisch nachgeführt, so dass das Flurförderzeug der Bedienperson automatisch folgt.

Nachteilig hieran ist, dass die sich in der Umgebung des Flurförderzeugs befindliche Personen bzw. insbesondere der beim Kommissionieren mitlaufende Bediener keine Rückmeldung erhält, ob das Flurförderzeug als Maschine bzw. Roboter ihn korrekt erkannt und erfasst hat. Das selbstständige und autonome Fahrverhalten des Flurförderzeugs erscheint dann oft oftmals nicht vorhersehbar für den Bediener. Dies vermindert das Vertrauen in ein solches autonomes Flurförderzeug. In der Folge ergibt sich oft ein sehr vorsichtiges Verhalten von Bedienern im Umfeld solcher Flurförderzeuge und es erfordert eine lange Einarbeitungszeit, bis ein entsprechendes Vertrauen in eine solche Technik gegeben ist.

Die CN 203 887 863 U offenbart einen bionischen Augapfel, der zur Simulation der Tracking-Positionierungsfunktion des menschlichen Auges dient.

Der vorliegenden Erfindung liegt die Aufgabe zugrunde, ein Flurförderzeug mit einem Assistenzsystem zur Verfügung zu stellen, durch das die zuvor genannten Nachteile vermieden werden und mit dem eine bedienende Umgebung des Flurförderzeugs eine Rückmeldung über die Erfassung durch ein Bilderkennungssystem erhält.

Diese Aufgabe wird durch ein Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass bei einem Flurförderzeug mit mindestens einem Umgebungssensor zur Erfassung der relativen Position eines Bedieners in der Umgebung des Flurförderzeugs, mindestens eine an dem Flurförderzeug angebrachte Pupillenanzeige eine Richtung auf den erkannten Bediener anzeigt, wobei die Pupillenanzeige aus einer um eine vertikale Achse gekrümmten Fläche, bevorzugt einer zylinderförmigen Fläche, besteht, auf der eine Markierungsfläche optisch hervorgehoben ist, so dass eine Verbindungslinie zwischen vertikaler Achse und Zentrum der Markierungsfläche als scheinbare Blickachse in Richtung des erkannten Bedieners zeigt.

Ähnlich einem Auge, bei dem durch die Stellung der Pupille erkennbar ist, ob der Blick direkt auf einen gerichtet ist, wird durch die Pupillenanzeige verdeutlicht, in welche Richtung eine Steuerung bzw. ein Bildverarbeitungssystem zur Überwachung der Umgebung eine Person, insbesondere den Bediener des Flurförderzeugs erkannt hat. Dabei wird bevorzugt immer die Pupillenanzeige auf diejenige Person ausgerichtet, die durch den Umgebungssensor erfasst wird und beispielsweise durch ein Steuerungssystem bzw. Bildverarbeitungssystem nachverfolgt wird. Dies muss nicht, ist jedoch im Regelfall der Bediener, dem beispielsweise die Steuerung das Flurförderzeug folgen lässt bzw. dieses neben diesem herfährt. Dabei folgt die Pupillenanzeige einer Ortsveränderung des Bedieners. Dadurch wird dem Bediener intuitiv eine Rückmeldung gegeben, dass seine Position der Steuerung des Flurförderzeugs bekannt ist. Dies führt zu einem schnelleren Vertrauen zu der Steuerung bzw. dem automatisierten Flurförderzeug und verkürzt somit Einarbeitungszeiten. Das Fahrzeugverhalten wird somit besser vorhersehbar. Die Kooperation zwischen Mensch und Maschine bzw. Bediener und Flurförderzeug wird verbessert. Die gekrümmte Fläche muss dabei nicht exakt eine Zylinderfläche sein, beispielsweise kann sie leicht kegelförmige nach unten ausgebildet sein. Wesentlich ist allein, dass eine Krümmung um eine vertikale Achse vorliegt und durch eine optische Darstellung der Markierungsfläche eine Art Pupille gebildet wird. Dies kann beispielsweise durch eine Beleuchtung von der Innenseite auf eine Glasfläche erfolgen.

Vorteilhaft ist die Fläche der Pupillenanzeige im Wesentlichen zylinderförmig.

Die Fläche der Pupillenanzeige kann im Wesentlichen kugelförmig sein.

Durch die Höhenposition der Markierungsfläche, aber insbesondere auch noch durch eine zusätzliche Krümmung nach innen zu der vertikalen Achse hin an der Oberkante und Unterkante, bzw. durch eine kugelförmige Oberfläche, kann zusätzlich noch eine Höheninformation für die Fokussierung der Markierungsfläche als Pupille erfolgen. Beispielsweise kann die "Blickrichtung" der Pupillenanzeige auf Augenhöhe des Bedieners ausgerichtet werden.

In einer günstigen Ausgestaltung erstreckt sich die Fläche der Pupillenanzeige um 360° um die vertikale Achse herum.

Wenn die Pupillenanzeige beispielsweise bei einem Lagertechnikfahrzeug als Kommissionier-Flurförderzeug relativ hoch angeordnet wird, sodass sie von allen Seiten erkennbar ist, ist es sinnvoll, den wirksamen Arbeitsbereich bzw. die gekrümmte Fläche über einen Winkelbereich von 360° um die vertikale Achse herum auszuführen. Es sind jedoch auch alle Teilbereiche oder Teilabschnitte wie beispielsweise bei einer an der Seite angeordneten Pupillenanzeige ein Winkelbereich von 180° denkbar.

Die Markierungsfläche kann eine senkrecht ausgerichtete Ellipsenfläche oder eine Kreisfläche sein.

Es ergibt sich eine intuitive Assoziation zu einem Auge bzw. einer Pupille. Durch diese Form wird auch angezeigt, dass sich das Flurförderzeug in einem Status befindet, in dem die Steuerung zum autonomen Fahren des Fahrzeuges aktiv ist und beispielsweise einem Bediener gefolgt wird, sobald sich dieser vorwärts bewegt.

In einer weiteren Ausgestaltung wird durch die Form der Markierungsfläche ein Pausenmodus angezeigt, insbesondere durch zwei senkrechte Balken im Zentrum der Ellipsenfläche oder Kreisfläche.

Dadurch kann beispielsweise ein Status angezeigt werden, indem die Position des Bedieners weiter erfasst wird, sich jedoch das Fahrzeug ansonsten in einer Art Pausenmodus befindet, in dem keine Fahrbewegungen erfolgen. Durch eine geeignete Signalgebung, beispielsweise eine Tastenbetätigung an einer Fernbedienung oder dem Flurförderzeug selbst, kann dann beispielsweise wieder in den normalen Status gewechselt werden, in dem das Fahrzeug autonom dem Bediener folgt. Grundsätzlich ist es möglich, auch weitere Statusmeldungen vorzusehen.

Durch die Form der Markierungsfläche kann die Nichterfassung der Position des Bedieners angezeigt werden, beispielsweise durch über die gesamte Fläche umlaufende waagerechte Linien und/oder zwei senkrechte Balken.

Das Fahrzeug ist dann in einem Pausenmodus und wird ohne Interaktion bzw. Schalterbetätigung keine Bewegung ausführen und erfasst auch nicht den Bediener.

Vorteilhaft sind an dem Flurförderzeug zwei Pupillenanzeigen angeordnet.

Es ergibt sich somit der scheinbare Effekt von zwei Augen, wie bei einem Gesicht, die den Bediener zu folgen scheinen, wenn er auf das Flurförderzeug blickt. Dabei können die Blickachsen der beiden Pupillenanzeigen sich bei dem Bediener schneiden, sodass der Effekt einer scheinbaren Fokussierung auftritt. Die beiden Pupillenanzeigen sind dann genau auf den Bediener ausgerichtet. Es ergibt sich eine intuitive Erfassung, die ohne eine Einweisung verständlich ist, da sie für jeden Menschen seiner sonstigen Erfahrungswelt mit anderen Personen entspricht, die ihn anschauen.

In einer günstigen Ausgestaltung weist das Flurförderzeug mindestens einen Antriebsteil und einen Lastaufnahmeteil mit einer Lastgabel auf und ist die Pupillenanzeige oberhalb des Antriebsteils angeordnet.

Ein Lagertechnik-Flurförderzeug das für die Kommissionierung eingesetzt wird, ist oftmals typischerweise so aufgebaut, dass neben einem Antriebsteil mit Traktionsbatterie und Antriebsmotor ein Fahrerstand ausgebildet ist und vor diesem eine Lastaufnahmevorrichtung beispielsweise in Form von Lastarmen, die eine Palette anheben können. Wenn dann vorteilhaft die Pupillenanzeigen, beispielsweise an einem Brückenträger zwei Stück jeweils an der Fahrzeugseite, so hoch angebracht werden, dass sie sich oberhalb des Antriebsteils und Fahrerstandes befinden, so sind die Pupillen anzeigen praktisch aus allen Richtungen zu erkennen.

Die Pupillenanzeige kann durch eine oder mehrere übereinander angeordnete LED-Linien gebildet werden.

Die Pupillenanzeige kann durch einen drehbaren Lichtspot gebildet werden.

Weitere Vorteile und Einzelheiten der Erfindung werden anhand der in den schematischen Figuren dargestellten Ausführungsbeispiele näher erläutert. Hierbei zeigt
- Fig. 1: ein Flurförderzeug mit zwei erfindungsgemäßen Pupillenanzeigen,
- Fig. 2: das Detail I der Fig. 1,
- Fig. 3: das Detail I der Fig. 1 mit einer weiteren Anzeige und
- Fig. 4: das Detail I der Fig. 1 mit einer weiteren Anzeige.

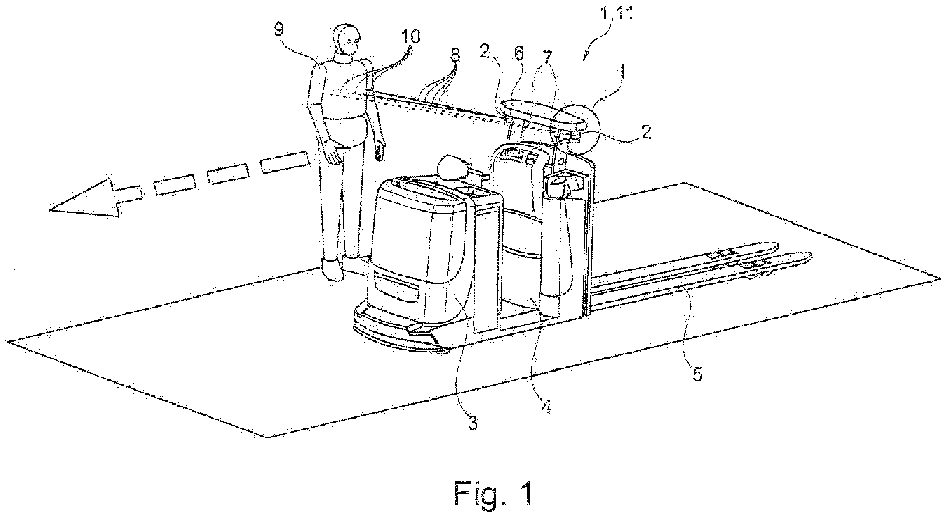

Die Fig. 1 zeigt ein Flurförderzeug 1 mit zwei erfindungsgemäßen Pupillenanzeigen 2. Das Flurförderzeug 1 ist ein Kommissionierfahrzeug 11 mit einem Antriebsteil 3, einem Fahrerstand 4 und Lastarmen 5 zur Aufnahme einer Palette. Die Pupillenanzeigen 2 sind an einem Brückenträger 6 oberhalb des Antriebsteils 3 und des Fahrerstands 4 angeordnet, sodass sie bis auf eine eventuelle Verdeckung durch senkrechte Tragelemente 7 des Brückenträgers 6, von allen Seiten sichtbar sind. Eine Markierungsfläche der Pupillenanzeigen 2 bildet jeweils eine scheinbare Blickachse 8 aus. Die Blickachsen 8 schneiden sich dabei auf Brusthöhe an der Position eines Bedieners 9 in einem Fokussierungspunkt 10. Wenn sich der Bediener 9, wie durch den Pfeil angezeigt, an dem Flurförderzeug 2 seitlich vorbei bewegt, wandert der Fokussierungspunkt 10 mit, hier verdeutlicht durch drei aufeinanderfolgende Fokussierungspunkte 10. Der Bediener 9 mit Blickrichtung auf die Pupillenanzeigen 2, wie in der Darstellung der Fig. 1, bekommt den intuitiven Eindruck, dass das Flurförderzeug 2 ihn erfasst hat.

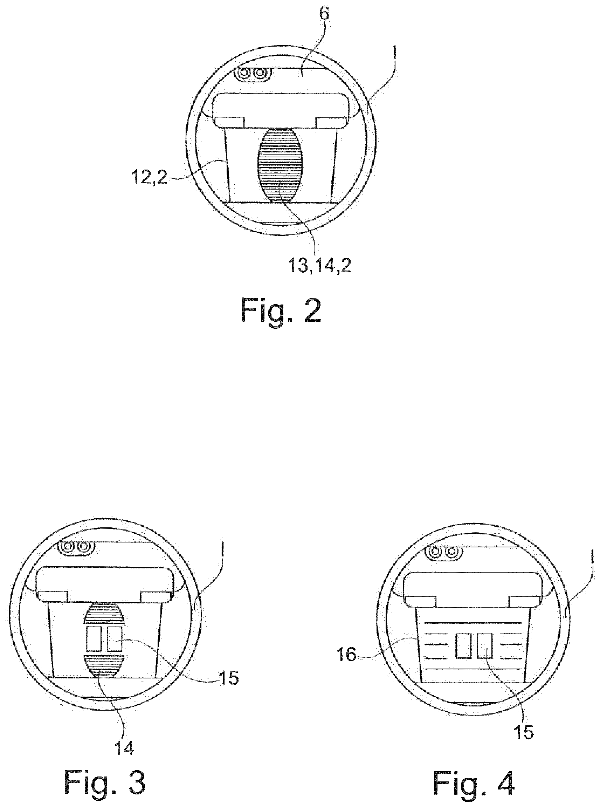

Die Fig. 2 zeigt das Detail I der Fig. 1. Die Pupillenanzeige 2 ist an dem Brückenträger 6 montiert. Auf einer um eine senkrechte Achse im wesentlichen zylinderförmig gekrümmten Fläche 12, die bei dem vorliegenden Ausführungsbeispiel nach unten leicht kegelförmig zuläuft, ist eine Markierungsfläche 13 als eine Art Pupille optisch hervorgehoben. Dies kann beispielsweise durch eine Beleuchtung von der Innenseite auf die halb durchscheinende Fläche 12 erfolgen. In dieser Form der Markierungsfläche als eine Ellipsenfläche 14 wird auch angezeigt, dass sich das Flurförderzeug 1 in einem Status befindet, in dem die Steuerung zum autonomen Fahren des Fahrzeuges aktiv ist und dem Bediener 9 gefolgt wird, sobald sich dieser vorwärts bewegt.

Die Fig. 3 zeigt das Detail I der Fig. 1 mit einer weiteren Anzeige. In der Ellipsenfläche 14 sind hier zwei senkrechte Balken 15 angeordnet. Hierdurch wird ein Status angezeigt, in dem die Position des Bedieners 9 weiter erfasst wird, sich jedoch das Flurförderzeug 1 ansonsten in einer Art Pausenmodus befindet, in dem keine Fahrbewegungen erfolgen.

In Fig. 4 wird das Detail I der Fig. 1 mit einer weiteren Anzeige dargestellt. Durch die zwei senkrechten Balken 15 und weitere waagerechte Linien 16 wird angezeigt, dass sich das Flurförderzeug 1 in einem Pausenstatus befindet, in dem nicht nur keine Fahrbewegungen erfolgen, sondern auch keine Erfassung des Bedieners 9 erfolgt.

## Patentansprüche

1. Flurförderzeug mit mindestens einem Umgebungssensor zur Erfassung der relativen Position eines Bedieners (9) in der Umgebung des Flurförderzeugs (1),
**dadurch gekennzeichnet,**
**dass** mindestens eine an dem Flurförderzeug (1) angebrachte Pupillenanzeige (2) eine Richtung auf den erkannten Bediener (9) anzeigt, wobei die Pupillenanzeige (2) aus einer um eine vertikale Achse gekrümmten Fläche (12), bevorzugt einer zylinderförmigen Fläche (12), besteht, auf der eine Markierungsfläche (13) optisch hervorgehoben ist, so dass eine Verbindungslinie zwischen vertikaler Achse und Zentrum der Markierungsfläche (13) als scheinbare Blickachse (8) in Richtung des erkannten Bedieners (9) zeigt.

2. Flurförderzeug nach Anspruch 1,
**dadurch gekennzeichnet,**
**dass** die Fläche (12) der Pupillenanzeige (2) im Wesentlichen zylinderförmig ist.

3. Flurförderzeug nach Anspruch 1 oder 2,
**dadurch gekennzeichnet,**
**dass** die Fläche (12) der Pupillenanzeige im Wesentlichen kugelförmig ist.

4. Flurförderzeug nach einem der Ansprüche 1 bis 3,
**dadurch gekennzeichnet,**
**dass** die Fläche (12) der Pupillenanzeige (2) sich um 360° um die vertikale Achse herum erstreckt.

5. Flurförderzeug nach einem der Ansprüche 1 bis 4,
**dadurch gekennzeichnet,**
**dass** die Markierungsfläche (13) eine senkrecht ausgerichtete Ellipsenfläche (14) oder eine Kreisfläche ist.

6. Flurförderzeug nach Anspruch 5,
**dadurch gekennzeichnet,**
**dass** durch die Form der Markierungsfläche (13) ein Pausenmodus angezeigt wird, insbesondere durch zwei senkrechte Balken (15) im Zentrum der Ellipsenfläche (14) oder Kreisfläche.

7. Flurförderzeug nach Anspruch 5,
**dadurch gekennzeichnet,**
**dass** durch die Form der Markierungsfläche (13) die Nichterfassung der Position des Bedieners (9) angezeigt wird, insbesondere durch über die gesamte Fläche (12) umlaufende waagerechte Linien (16) und/oder zwei senkrechte Balken (15).

8. Flurförderzeug nach einem der Ansprüche 1 bis 7,
**dadurch gekennzeichnet,**
**dass** an dem Flurförderzeug (1) zwei Pupillenanzeigen (2) angeordnet sind.

9. Flurförderzeug nach einem der Ansprüche 1 bis 8,
**dadurch gekennzeichnet,**
**dass** das Flurförderzeug (1) mindestens einen Antriebsteil (3) und einen Lastaufnahmeteil mit einer Lastgabel aufweist und die Pupillenanzeige (2) oberhalb des Antriebsteils (3) angeordnet ist.

10. Flurförderzeug nach einem der Ansprüche 1 bis 9,
**dadurch gekennzeichnet,**
**dass** die Pupillenanzeige (2) durch eine oder mehrere übereinander angeordnete LED-Linien gebildet wird.

11. Flurförderzeug nach einem der Ansprüche 1 bis 10,
**dadurch gekennzeichnet,**
**dass** die Pupillenanzeige (2) durch einen drehbaren Lichtspot gebildet wird.

## Claims

1. Industrial truck having at least one surroundings sensor for sensing the relative position of an operator (9) in the surroundings of the industrial truck (1),
**characterized**
**in that** at least one pupil display (2) which is provided on the industrial truck (1) displays the direction towards the detected operator (9), wherein the pupil display (2) is composed of a surface (12) which is curved about a vertical axis, preferably a cylindrical surface (12), on which a marking surface (13) is visually highlighted with the result that a connecting line between the vertical axis and the centre of the marking surface (13) points, as a virtual viewing axis (8), in the direction of the detected operator (9).

2. Industrial truck according to Claim 1,
**characterized**
**in that** the surface (12) of the pupil display (2) is essentially cylindrical.

3. Industrial truck according to Claim 1 or 2,
**characterized**
**in that** the surface (12) of the pupil display is essentially spherical.

4. Industrial truck according to one of Claims 1 to 3,
**characterized**
**in that** the surface (12) of the pupil display (2) extends through 360° about the vertical axis.

5. Industrial truck according to one of Claims 1 to 4,
**characterized**
**in that** the marking surface (13) is a perpendicularly oriented ellipsoidal surface (14) or a circular surface.

6. Industrial truck according to Claim 5,
**characterized**
**in that** a pause mode is displayed by the shape of the marking surface (13), in particular by two vertical bars (15) in the centre of the ellipsoidal surface (14) or circular surface.

7. Industrial truck according to Claim 5,
**characterized**
**in that** the failure to detect the position of the operator (9) is displayed by the shape of the marking surface (13), in particular by horizontal lines (16) running around the entire surface (12) and/or two vertical bars (15).

8. Industrial truck according to one of Claims 1 to 7,
**characterized**
**in that** two pupil displays (2) are arranged on the industrial truck (1).

9. Industrial truck according to one of Claims 1 to 8,
**characterized**
**in that** the industrial truck (1) has at least one drive part (3) and a load receiving part with a load fork, and the pupil display (2) is arranged above the drive part (3).

10. Industrial truck according to one of Claims 1 to 9,
**characterized**
**in that** the pupil display (2) is formed by one or more LED lines arranged one above the other.

11. Industrial truck according to one of Claims 1 to 10,
**characterized**
**in that** the pupil display (2) is formed by a rotatable light spot.

## Revendications

1. Chariot de manutention doté d'au moins un détecteur d'environnement pour la détection de la position relative d'un opérateur (9) dans l'environnement du chariot de manutention (1), **caractérisé en ce qu'**au moins un affichage pupillaire (2) installé sur le chariot de manutention (1) indique une direction vers l'opérateur détecté (9), dans lequel l'affichage pupillaire (2) se compose d'une surface (12) incurvée autour d'un axe vertical, de préférence d'une surface cylindrique (12), sur laquelle une face de marquage (13) est optiquement soulignée, de telle manière qu'une ligne de jonction entre l'axe vertical et le centre de la face de marquage (13) pointe sous la forme d'un axe de visée virtuel (8) en direction de l'opérateur détecté (9).

2. Chariot de manutention selon la revendication 1, **caractérisé en ce que** la face (12) de l'affichage pupillaire (2) est essentiellement cylindrique.

3. Chariot de manutention selon la revendication 1 ou 2, **caractérisé en ce que** la face (12) de l'affichage pupillaire est essentiellement sphérique.

4. Chariot de manutention selon l'une quelconque des revendications 1 à 3, **caractérisé en ce que** la face (12) de l'affichage pupillaire (2) s'étend sur 360° autour de l'axe vertical.

5. Chariot de manutention selon l'une quelconque des revendications 1 à 4, **caractérisé en ce que** la face de marquage (13) est une face elliptique (14) ou une face circulaire orientée verticalement.

6. Chariot de manutention selon la revendication 5, **caractérisé en ce qu'**un mode pause est affiché par la forme de la face de marquage (13), en particulier par deux barres verticales (15) au centre de la face elliptique (14) ou de la face circulaire.

7. Chariot de manutention selon la revendication 5, **caractérisé en ce qu'**une absence de détection de la position de l'opérateur (9) est affichée par la forme de la face de marquage (13), en particulier par des lignes horizontales (16) couvrant toute la face (12) et/ou par deux barres verticales (15).

8. Chariot de manutention selon l'une quelconque des revendications 1 à 7, **caractérisé en ce que** deux affichages pupillaires (2) sont disposés sur le chariot de manutention (1).

9. Chariot de manutention selon l'une quelconque des revendications 1 à 8, **caractérisé en ce que** le chariot de manutention (1) présente au moins une partie d'entraînement (3) et une partie de réception de charge avec une fourche de chargement et l'affichage pupillaire (2) est placé au-dessus de la partie d'entraînement (3).

10. Chariot de manutention selon l'une quelconque des revendications 1 à 9, **caractérisé en ce que** l'affichage pupillaire (2) est formé par une ou plusieurs lignes de LED disposées l'une au-dessus de l'autre.

11. Chariot de manutention selon l'une quelconque des revendications 1 à 10, **caractérisé en ce que** l'affichage pupillaire (2) est formé par une tache lumineuse tournante.
